Europäisches Patentamt

European Patent Office

Office européen des brevets

(19)

(11) Numéro de publication: **0 263 018 B1**

(12) **FASCICULE DE BREVET EUROPEEN**

(45) Date de publication de fascicule du brevet:
**21.08.91**

(21) Numéro de dépôt: **87402109.0**

(22) Date de dépôt: **22.09.87**

(51) Int. Cl.⁵: **H02B 1/30**

(54) **Assemblage de porte sur coffret électrique et éléments constitutifs.**

(30) Priorité: **30.09.86 FR 8613569**

(43) Date de publication de la demande:
**06.04.88 Bulletin 88/14**

(45) Mention de la délivrance du brevet:
**21.08.91 Bulletin 91/34**

(84) Etats contractants désignés:
**BE CH DE FR GB IT LI NL SE**

(56) Documents cités:
**EP-A- 0 038 934**
**EP-A- 0 202 565**
**DE-U- 7 821 180**
**DE-U- 8 006 330**

(73) Titulaire: **HAGER ELECTRO S.A.**
**Boulevard d'Europe**
**F-67210 Obernai(FR)**

(72) Inventeur: **Lehning, Guy**
**49 Boulevard d'Europe**
**F-67210 Obernai(FR)**
Inventeur: **Hasenfratz, Daniel**
**11 Rempart Joffre**
**F-67210 Obernai(FR)**

(74) Mandataire: **Bernasconi, Jean et al**
**Cabinet Michel Lemoine 13 Boulevard des**
**Batignolles**
**F-75008 Paris(FR)**

Rank Xerox (UK) Business Services

## Description

La présente invention a trait à un assemblage de porte sur des coffrets électriques tels que les coffrets muraux destinés à supporter et contenir des appareils électriques tels que par exemple, fusibles, coupe-circuit, disjoncteurs etc...

Les appareils de protection et de distribution électrique tels que disjoncteurs, coupe-circuit, fusibles, relais, etc..., utilisés notamment dans les installations électriques de locaux, sont généralement supportés sur des rails à l'intérieur de coffrets en matière isolante fixés par exemple sur un mur ou une paroi. Plus précisément, on fixe, sur un mur ou une paroi, un châssis sur lequel on vient fixer les différents appareils électriques et effectuer les raccordements de conducteurs correspondants, après quoi on met en place un coffret dépourvu de fond mais comprenant quatre parois latérales et une paroi frontale munie d'ouvertures permettant le passage des organes de manoeuvre des appareils électriques, ces coffrets étant fixés sur le châssis par l'intermédiaire de vis, en général isolantes, et traversant des fûts présentés intérieurement par le coffret, lesquels fûts viennent s'aligner axialement avec des parties de châssis présentant le filetage femelle coopérant avec l'extrémité de la vis.

Dans certaines réalisations déjà diffusées par la déposante, ces fûts présentent chacun une fente longitudinale et l'invention s'applique plus particulièrement à ces coffrets mais elle peut également s'appliquer aux autres coffrets dont les fûts sont dépourvus de fentes.

On a déjà proposé de monter, sur ces coffrets, des portes susceptibles d'être rabattues sur la face apparente du coffret pour masquer les organes de commande des appareils et éviter leur actionnement intempestif. (voir par exemple le document EP-A- 00 38934). Jusqu'à présent, pour mettre en place ces portes, on était obligé d'effectuer des perçages dans le coffret pour monter des charnières, ce qui nécessite un travail délicat et conduit à des solutions inesthétiques et peu fiables.

La présente invention se propose de remédier à ces inconvénients et de founir un assemblage permettant de mettre en place, sur les coffrets déjà montés et qui n'étaient pas prévus pour les recevoir, des portes sans nécessiter aucun usinage ou perçage.

En outre, l'invention se prête, par sa simplicité et son bas prix de revient, à la livraison systématique de nouveaux coffrets avec leurs portes, sans qu'il soit nécessiare de prévoir des pièces différentes selon qu'il s'agisse d'équiper un coffret déjà posé ou les coffrets qui seront vendus avec leurs portes.

L'invention a pour objet un assemblage d'une porte sur un coffret électrique, lequel coffret présente une face antérieure munie de plusieurs orifices se poursuivant par des fûts pour s'aligner avec des parties réceptrices femelles d'un châssis sur lequel le coffret est monté pour le passage de vis allongées de fixation, en général en matière plastique, dont l'extrémité est vissée dans la partie femelle de châssis et la tête coopère avec une portée correspondante due coffret pour assurer le blocage du coffret sur le châssis, caractérisé en ce qu'il comprend une porte présentant une forme générale de bac avec un fond et des côtés pour venir se poser sur la face antérieure du coffret, au moins deux charnières, de préférence sans axe, et présentant une partie fixe munie de moyens susceptibles d'être fixés contre la paroi antérieure de coffret par l'intermédiaire d'une tête de vis, et une partie mobile susceptible d'être solidarisée, par exemple par un raccord rapide, avec l'un des côtés de la porte, et au moins un clip de fermeture susceptible d'être fixé, comme la partie fixe de charnière, contre la face antérieure du coffret par une tête de vis, et présentant un moyen d'encliquetage ou de frottement assurant le maintien à l'état fermé de la porte.

Dans une forme de réalisation préférée de l'invention, la partie fixe de la charnière et/ou la partie correspondante du clip présentent une forme extérieure géométrique sensiblement identique à celle des têtes de vis connues utilisées pour fixer le coffret sur le châssis et l'ensemble selon l'invention incorpore alors des vis dont la tête présente des dimensions inférieures à celles des têtes de vis connues et coopère avec une zone interne de la partie de charnière et/ou du clip pour assurer la fixation de cette pièce contre la face antérieure du coffret.

Dans le cas préféré de l'invention où le fût de coffret présente une fente longitudinale, la partie fixe de charnière et/ou le clip présentent un prolongement susceptible de pénétrer dans la fente pour une immobilisation en rotation par rapport au coffret de sorte que l'axe de charnière se trouve automatiquement indexé dans une position convenable, de même que le clip, qui peut alors présenter un moyen d'encliquetage ayant une orientation spatiale prédéterminé.

La fixation rapide de la partie mobile de charnière dans la porte s'effectue de préférence par simple encliquetage.

Dans le cas où l'on utilise un clip n'ayant pas une orientation spatiale prédéterminée, c'est-à-dire un clip présentant une forme sensiblement circulaire pour pouvoir coopérer avec la porte dans n'importe quelle position angulaire, ce clip peut être solidaire de la tête de vis correspondante ou être moulé d'un seul tenant avec la vis mais cette solution n'est pas préférée.

D'autres avantages de l'invention apparaîtront à la lecture de la description suivante faite à titre d'exemple non limitatif et se référant au dessin annexé dans lequel :

la figure 1 représente une vue en coupe horizontale au travers d'un coffret équipé de sa porte;

la figure 2 représente un vue en couple analogue à la figure 1 au niveau de la charnière, la porte étant en position ouverte;

la figure 3 représente une vue de dessus de la charnière en position ouverte ;

la figure 4 représente une vue de profil de la charnière;

la figure 5 représente une vue de dessus du clip.

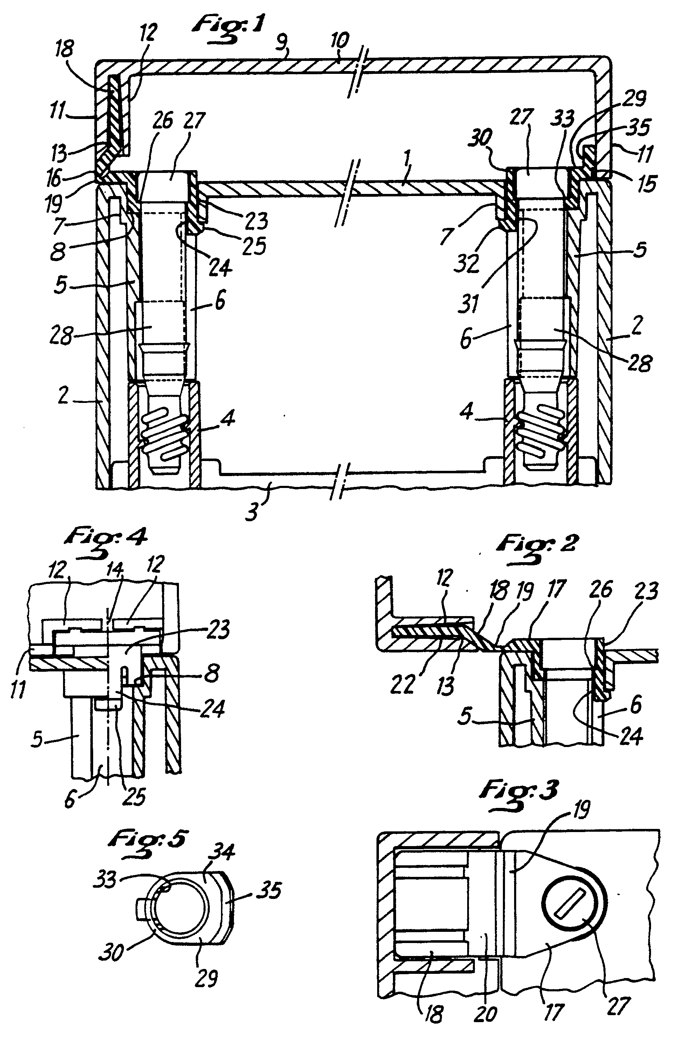

Le coffret, de type classique, tel que par exemple celui vendu sous la marque GAMMA par la déposante, présente une face antérieure 1 verticale et quatre faces latérales 2 en étant dépourvu d'un fond. Le coffret vient se glisser autour d'un châssis 3 fixé contre le mur et présentant les bornes de raccordement et moyens de fixation des appareils (non représentés). La face 1 du coffret est pourvue d'ouvertures et de passages pour permettre le passage des organes d'actionnement (non représentés) des appareils. Pour la fixation due coffret, le châssis 3 présente, d'une façon connue, des manchons en matière plastique 4 munis d'un filetage interne. La face antérieure 1 du coffret présente, au niveau des quatre coins de la face 1 de forme rectangulaire, quatre ouvertures débouchant dans des fûts 5 munis de fentes longitudinales 6 orientées vers le plan géométrique vertical médian du coffret. On voit que, pour fixer le coffret, on amène les extrémités des fûts 5 contre les extrémités correspondantes des manchons 4 et l'on fixe le coffret par des vis traversant les fûts et prenant appui, dans des logements 7 correspondants de la face antérieure 1 de coffret, sur des portées 8 au niveau du début du fût.

L'assemblage de porte selon l'invention comporte une porte 9 formée d'un panneau 10 ayant la même surface que la face antérieure 1, et de quatre côtés latéraux 11 à la façon d'un bac. L'un des côtés 11 présente au niveau de chacune des deux vis ou fûts, une surépaisseur interne dans laquelle est pratiqué une logement 12 de forme aplatie dont l'une des faces internes, celle située dans le prolongement de la face 11 proprement dite, présente une contre-dépouille d'accrochage 13. De préférence, la face opposée de la surépaisseur présente une fente centrale 14 permettant une certaine déformation élastique des deux parties qu'elle distingue dans la face.

Le côté 11 parallèle à celui qui porte les surépaisseurs de logement 12, possède une petite contredépouille 15 chaque fois au regard de l'un des logements 12.

L'assemblage comporte également, au niveau de chacun des logements 12, une charnière 16 en matière plastique d'un seul tenant et présentant plus précisément une partie fixe 17 et une partie articulée 18 réunies par un pont déformable aminci d'articulation 19. On voit, par ailleurs, qu'au niveau de ce pont 19, la paroi 11 de porte présente une encoche recevant librement la partie centrale de la charnière.

Afin de permettre une fixation rapide dans le logement 12 de porte, la partie mobile 18 de charnière présente, après une zone inclinée 20 faisant suite au pont déformable 19, une partie complémentaire au logement 12 avec des nervures supérieures 21 pénétrant dans des creusures correspondantes du logement 12 et des nervures inférieures 22, les nervures 21 et 22 étant orientées en chanfrein pour faciliter l'introduction de la partie 18 dans le logement 12. En outre, les nervures inférieures 22 présentent un décrochement postérieur venant s'accrocher sur la contredépouille 14 de sorte qu'une fois que la partie articulé de charnière 18 a été introduite dans le logement 12, elle y reste maintenue contre tout effort d'extraction.

La partie fixe 17 de charnière présente une paroi cylindrique 23 dont l'encombrement extérieur correspond à celui des têtes de vis usuelles de sorte que cette partie cylindrique 23 vient se loger très exactement dans le siège 7, son extrémité inférieure venant buter contre la portée 8. Par ailleurs, la partie cylindrique 23 présente un prolongement vertical 24 orienté vers le bas et se terminant par un bec externe 25, la largeur du prolongement 24 et du bec étant légèrement inférieure à la largeur de la fente 6 de sorte que, lorsque le prolongement 24 pénètre dans la fente 6 du fût 5, la charnière 16 se trouve indexée angulairement dans la position représentée sur le dessin, dans laquelle l'axe géométrique du pont d'articulation 19 est parallèle à l'arête correspondante du coffret formée par la face antérieure 1 et la face latérale pertinente 2.

La portion cylindrique 23 de la partie fixe 17 de la charnière est généralement creuse et présente une portée interne formée par un décrochement 26 de sorte que dans le logement ansi formé, peut venir s'introduire la tête 27 d'une vis 28 faisant partie de l'assemblage, cette vis 28 étant identique aux vis usuelles de coffret à la différence près que la tête 27 présente une épaisseur et un diamètre inférieurs lui permettant de coopérer avec le logement interne de la partie cylindrique 23 au lieu de coopérer avec le logement 7.

Au niveau des deux autres orifices et fûts 5, se trouve chaque fois disposée une pièce d'arrêt ou clip 29. Le clip 29 présente une portion ayant une forme cylindrique 30 identique à la partie 23 et, en conséquence, munie d'un prolongement 31 et d'un bec 32 respectivement identiques au prolongement 24 et au bec 25, l'intérieur de la partie 30 formant également un logement identique au logement de la partie 23, avec une portée 33 identique à la portée 26, de façon à assurer la fixation angulaire indexée de la pièce ou clip 29 par une vis 28. Le clip 29 présente encore, à l'extrémité d'un bras latéral 34, un rebord d'arrêt 35 présentant un relief complémentaire à la contre-dépouille 15 de la paroi 11 de porte, ce qui permet d'immobiliser la porte à l'état fermé tant que la force d'ouverture ne dépasse pas la valeur correspondant à la raideur élastique du clip ainsi formé.

On comprend qu'on a ainsi réalisé le montage d'une porte en n'utilisant, en dehors de la porte elle-même, que trois types de pièces fabriquées par injection-moulage, à savoir la charnière 16, le clip 29 et les vis 28, ce qui diminue les problèmes de fabrication, simplifie considérablement le montage, permet d'équiper de portes des coffrets déjà posés et de livrer au choix de nouveaux coffrets avec ou sans portes avec la possibilité de monter ultérieurement les portes séparées.

## Revendications

1. Assemblage d'une porte sur un coffret électrique, lequel coffret présente une face antérieure (1) munie de plusieurs orifices se poursuivant par des fûts (5) pour s'aligner avec des parties réceptrices femelles d'un châssis sur lequel le coffret est monté pour le passage de vis allongées de fixation dont l'extrémité est vissée dans la partie femelle de châssis et la tête coopère avec une portée (7) correspondante du coffret pour assurer le blocage du coffret sur le châssis, caractérisé en ce qu'il comporte une porte (9) présentant une forme générale de bac avec un fond (10) et des côtés (11) pour venir se poser sur la face antérieure (1) du coffret, au moins deux charnières (16) présentant une partie fixe (17) munie de moyens (23, 26) susceptibles d'être fixés contre la paroi antérieure de coffret par l'intermédiaire d'une tête (27) de vis (28), et une partie articulée (18) susceptible d'être solidarisée avec l'un des côtes (11) de la porte, et au moins un clip de fermeture (29) susceptible d'être fixé, comme la partie fixe de charnière, contre la face antérieure (1) du coffret par une tête de vis (27) et présentant un moyen d'encliquetage ou de frottement (35) assurant le maintien à l'état fermé de la porte.

2. Assemblage selon la revendication 1, caractérisé en ce que la partie fixe (17) de la charnière et/ou la partie correspondante (30) du clip présentent une forme extérieure géométrique sensiblement identique à celle des têtes de vis connues utilisées pour fixer le coffret sur le châssis, et en ce que l'ensemble incorpore des vis (28) dont la tête (27) présente des dimensions inférieures à celles des têtes de vis connues et coopère avec une zone interne de ladite partie de charnière et/ou de clip pour assurer la fixation de cette pièce contre la face antérieure du coffret.

3. Assemblage selon l'une des revendications 1 et 2 pour coffrets présentant des fûts (5) munis de fentes longitudinales (6), caractérisé en ce que ladite partie fixe (23) de charnière et/ou le clip (29) présentent un prolongement (24, 31) susceptible de pénétrer dans la fente (6) pour assurer une immobilisation en rotation par rapport au coffret de sorte que l'axe et/ou le clip se trouvent automatiquement indexés dans une position convenable.

4. Assemblage selon l'une quelconque des revendications 1 à 3, caractérisé en ce que la partie articulée (18) de charnière (16) présente des moyens de raccordement rapide pour être fixée sur la porte (9).

5. Charnière pour assemblage selon l'une quelconque des revendications 1 à 4, caractérisé en ce qu'elle comporte une partie fixe (17) munie de moyens susceptibles d'être fixés contre la paroi antérieure de coffret (1) par l'intermédiaire d'une tête de vis (27) et une partie articulée (18) susceptible d'être solidarisée avec l'un des côtes de la porte, la partie fixe de charnière (17) présentant une partie cylindrique (23) susceptible de venir se loger dans une portée (7) de la face antérieure de coffret, ladite partie (23) étant creuse et présentant une portée (26) recevant, pour la fixation, une tête (27) d'une vis (28) assurant l'assemblage du coffret au châssis.

6. Charnière selon la revendication 5, caractérisée en ce que la partie articulée de charnière (18) présente une forme lui permettant d'être introduite avec effet d'encliquetage dans un logement (12) du côté latéral (11) de la porte pour un accrochage par encliquetage (13).

7. Clip destiné à être intégré à l'assemblage selon l'une quelconque des revendications 1 à 4 caractérisé en ce qu'il comporte une partie ayant une forme cylindrique (30) susceptible de se loger dans une portée (7) présentée par la face antérieure (1) du coffret, ladite partie (30) étant creuse pour former à l'intérieur une portée recevant, pour la fixation, une tête (27) de vis (28) destinée à assurer l'assemblage du coffret au châssis.

**8.** Clip selon la revendication 7, caractérisé en ce qu'il présente, porté par un bras latéral (34), un rebord (35) présentant des moyens d'encliquetage avec un moyen complémentaire (15) de la porte.

**9.** Charnière ou clip selon l'une quelconque des revendications 5 à 8, caractérisés en ce que leur partie cylindrique (23, 30) se poursuit par un prolongement (24, 31) muni d'un bec (25, 32) pour pénétrer dans une fente (6) de fût (5) de coffret.

**10.** Vis pour la fixation du coffret sur le châssis, caractérisée en ce qu'elle présente, pour la fixation de la charnière selon l'une quelconque des revendications 5, 6 et 9 ou clip selon l'une quelconque des revendications 7 à 9, une tête de dimension réduite (27) venant se loger à l'intérieur de la partie creuse de corps cylindrique (23, 30), de la charniére ou du clip.

**11.** Porte destinée à être incorporée dans l'assemblage selon l'une quelconque des revendications 1 à 4, caractérisée en ce qu'elle présente, sur l'une de ses faces, des logements (12) susceptibles de recevoir, par des moyens de raccordement rapide à encliquetage (13), chaque fois la partie articulée (18) d'une charnière, le côté opposé de la porte présentant des moyens d'encliquetage (15) pour la fermeture à l'aide du clip.

## Claims

**1.** Mounting of a door on an electrical switch box, said switch box having a front face (1) provided with a plurality of orifices which are extended in the form of shafts (5) for alignment with female receiving members on a chassis on which the switch box is mounted for passage of elongated fixing screws the ends of which are screwed into the female chassis part while the head cooperates with a corresponding bearing member (7) on the switch box to ensure locking of the latter on the chassis, characterised in that it comprises a door (9) of generally recessed shape with a bottom (10) and sides (11) and adapted to be fitted over the front face (1) of the switch box, at least two hinges (16) comprising a fixed part (17) provided with means (23, 26) adapted to be fixed against the front wall of the switch box through a head (27) of a screw (28) and an articulated part (18) adapted to be fixed to one of the sides (11) of the door and at least one closure clip (29) adapted to be fixed, like the fixed part of the hinge, against the front face (1) of the switch box by a screw head (27) and having frictional or snap-on fixing means (35) for keeping the door in a closed state.

**2.** Mounting according to Claim 1, characterised in that the fixed part (17) of the hinge and/or corresponding part (30) of the clip have an outer form which is substantially geometrically identical to that of the known screw heads which are used for fixing the switch box on the chassis and in that the assembly incorporates screws (28) of which the head (27) has dimensions which are smaller than those of the known screw heads and cooperates with an inner zone of the said hinge part and/or clip in order to ensure fitment of this part against the front face of the switch box.

**3.** Mounting according to one of Claims 1 and 2 for switch boxes comprising shafts (5) provided with longitudinal slots (6), characterised in that the said fixed hinge part (23) and/or clip (29) comprise an extension (24, 31) adapted to penetrate the slot (6) in order to ensure rotational immobilisation in relation to the switch box so that the spindle and/or clip are automatically indexed in a suitable position.

**4.** Mounting according to any one of Claims 1 to 3, characterised in that the articulated part (18) of the hinge (16) has rapid coupling means for fitment on the door (9).

**5.** A hinge for a mounting according to any one of Claims 1 to 4, characterised in that it comprises a fixed part (17) provided with means adapted to be fixed against the front wall of the switch box (1) through a head of a screw (27) and an articulated part (18) adapted to be rigid with one of the sides of the door, the fixed hinge part (17) having a cylindrical part (23) adapted to be housed in a bearing (7) on the front face of the switch box, the said part (23) being hollow and comprising a bearing portion (26) which, for mounting purposes, receives a head (27) of a screw (28) ensuring mounting of the switch box on the chassis.

**6.** A hinge according to Claim 5, characterised in that the articulated hinge part (18) has a shape which allows it to be introduced with a clip-fitment effect in a housing (12) on the side (11) of the door for engagement with a click-stop effect (13).

7. A clip intended to be integrated into the mounting according to any one of Claims 1 to 4, characterised in that it comprises a part (30) of cylindrical shape adapted to be housed in the bearing (7) provided on the front face (1) of the switch box, the said part (30) being hollow to form on the inside a bearing which, for fixing, accommodates a head (27) of a screw (28) adapted to provide a means of mounting the switch box on the chassis.

8. A clip according to Claim 7, characterised in that it comprises, carried by a lateral arm (34), a returned edge (35) having snap-action fixing means to engage a complementary means (15) on the door.

9. A hinge or clip according to any one of Claims 5 to 8, characterised in that their cylindrical part (23, 30) is continued by an extension (24, 31) provided with a mouth (25, 32) adapted to penetrate a slot (6) in a shaft (5) on the switch box.

10. A screw for fixing the switch box on the chassis, characterised in that for fixing the hinge according to any one of Claims 5, 6 and 9 or clip according to any one of Claims 7 to 9, it comprises a small-size head (27) adapted to be housed inside the hollow part of the cylindrical body (23, 30) of the hinge or clip.

11. A door intended to be incorporated into the mounting according to any one of Claims 1 to 4, characterised in that on one of its faces it has housings (12) adapted to receive by rapid snap-action connecting means (13) in each case the articulated part (18) of a hinge, the opposite side of the door having snap-action fixing means (15) for closure by means of a clip.

**Patentansprüche**

1. Türbefestigung für einen elektrischen Kasten, der eine Vorderseite (1) aufweist, die mit mehreren Öffnungen versehen ist, die sich in Zapfen (5) zur Ausrichtung auf Zapfenaufnahmeteile eines Chassis fortsetzen, auf dem der Kasten montiert ist, für den Durchgang von länglichen Befestigungsschrauben, deren Ende in das Zapfenaufnahmeteil des Chassis eingeschraubt ist und deren Kopf mit einem entsprechenden Ansatz (7) des Kastens zusammenwirkt, um den Kasten an dem Chassis festzulegen, **dadurch gekennzeichnet,** daß sie eine Tür (9) aufweist, die eine im wesentlichen trogförmige Gestalt hat mit einem Boden (10) und Seiten (11), um sich auf die Vorderseite (1) des Kastens zu legen, wenigstens zwei Scharniere (16), die ein festes Teil (17), das mit Einrichtungen (23,26) zur Befestigung an der Vorderwand des Kastens mittels eines Schraubenkopfes (27) versehen ist, und ein Gelenkteil (18) aufweisen, das fest mit einer der Seiten (11) der Tür verbunden werden kann, und wenigstens eine Verschlußklammer (29) enthält, die, wie das feste Teil des Scharniers, an der Vorderseite (1) des Kastens mittels eines Schraubenkopfes (27) befestigt werden kann und eine Rast- oder Reibungseinrichtung (35) aufweist, die die Aufrechterhaltung des geschlossenen Zustands der Tür bewirkt.

2. Befestigung nach Anspruch 1, dadurch gekennzeichnet, daß das feste Teil (17) des Scharniers und/oder das entsprechende Teil (30) der Klammer eine geometrische Außengestalt aufweist, die im wesentlichen identisch der der bekannnten Schraubenköpfe ist, die dazu verwendet werden, den Kasten an dem Chassis zu befestigten, und daß die Anordnung Schrauben (28) aufweist, deren Kopf (27) Abmessungen hat, die kleiner als die der bekannten Schraubenköpfe sind und der mit einer Innenzone des genannten Scharnierteils und/oder der Klammer zusammenwirken, um die Befestigung dieses Teils an der Vorderseite des Kastens zu bewirken.

3. Befestigung nach einem der Ansprüche 1 und 2 für Kästen, die Zapfen (5) aufweisen, die mit Längsschlitzen (6) versehen sind, dadurch gekennzeichnet, daß das feste Teil (23) des Scharniers und/oder der Klammer (29) eine Verlängerung (24,31) aufweist, die in den Schlitz (6) eindringen kann, um eine Drehsicherung gegenüber dem Kasten zu bewirken derart, daß die Achse und/oder die Klammer sich automatisch in einer geeigneten Position festgelegt finden.

4. Befestigung nach einem der Ansprüche 1 und 3, dadurch gekennzeichnet, daß das gelenkige Teil (18) des Scharniers (16) Schnellverbindungseinrichtungen zur Befestigung an der Tür (9) aufweist.

5. Scharnier für eine Befestigung nach einem der Ansprüche 1 bis 4, dadurch gekennzeichnet, daß es ein festes Teil (17), das mit Einrichtungen zur Befestigung an der Kastenvorderwand (1) mittels eines Schraubenkopfes (27) und ein gelenkiges Teil (18) zur Befestigung an einer der Seiten der Tür aufweist, wobei das feste Scharnierteil (17) einen zylindrischen Abschnitt (23) aufweist, der zur Aufnahme in einen Ansatz ( 7) der Vorderseite des Kastens geeignet ist und der hohl ist und einen Ansatz (26) aufweist, der zur Befestigung einen Kopf (27) einer Schraube (28) aufweist, die die Montage des Kastens am Chassis bewirkt.

6. Scharnier nach Anspruch 5, dadurch gekennzeichnet, daß das gelenkige Scharnierteil (18) eine Form aufweist, die es ihm erlaubt, mit Rastwirkung in eine Aufnahme (12) an der Querseite (11) der Tür zur Verankerung durch Verrastung (13) eingeführt zu werden.

7. Klammer zum Einbau bei der Befestigung nach einem der Ansprüche 1 bis 4, dadurch gekennzeichnet, daß sie einen Abschnitt aufweist, der eine zylindrische Form (30) hat, die zur Aufnahme in einem Ansatz (7) geeignet ist, der an der Vorderseite (1) des Kastens ausgebildet ist, welcher Abschnitt (30) hohl ist, um in Innern eine Aufnahme für die Befestigung eines Schraubenkopfes (27) zu bilden, der zur Montage des Kastens am Chassis dient.

8. Klammer nach Anspruch 7, dadurch gekennzeichnet, daß sie einen von einem Querarm (24) gehaltenen Rand (35) aufweist, der Rasteinrichtungen für eine komplementäre Einrichtung (15) der Tür aufweist.

9. Scharnier oder Klammer nach einem der Ansprüche 5 bis 8, dadurch gekennzeichnet, daß ihr zylindrischer Abschnitt (23,30) sich in einer Verlängerung (24,31) fortsetzt, der mit einer Nase (25,32) zum Eindringen in einen Schlitz (6) am Zapfen (5) des Kastens versehen ist.

10. Schraube zur Befestigung des Kastens an dem Chassis, dadurch gekennzeichnet, daß sie für die Befestigung des Scharniers nach einem der Ansprüche 5, 6 und 9 oder der Klammer nach einem der Ansprüche 1 bis 9 einen Kopf verminderter Abmessung (27) aufweist, der vom Innern des hohlen Abschnitts des zylindrischen Körpers (23,30) des Scharniers oder der Klammer aufgenommen wird.

11. Tür zum Einbau bei der Befestigung nach einem der Ansprüche 1 bis 4, dadurch gekennzeichnet, daß sie an einer ihrer Seiten Aufnahmen (12) zur Aufnahme des gelenkigen Teils (18) eines Scharniers durch Rastschnellverbindungseinrichtungen (13) aufweist, wobei die gegenüberliegende Seite der Tür Rasteinrichtungen (15) für das Verschließen mittels der Klammer aufweist.

*Fig.1*

*Fig.4*

*Fig.2*

*Fig.5*

*Fig.3*